# EUROPEAN PATENT SPECIFICATION

(11) **EP 2 564 062 B1**
(45) Date of publication and mention of the grant of the patent: **18.01.2017**
(21) Application number: 11749937.6
(22) Date of filing: 06.07.2011
(51) Int. Cl.: F03D 15/00, F03D 9/00

(54) **ENERGY EXTRACTION DEVICE WITH ELECTRICAL GENERATOR AND METHOD OF OPERATING ENERGY EXTRACTION DEVICE ELECTRICAL GENERATOR**
ENERGIEEXTRAKTIONSVORRICHTUNG MIT STROMGENERATOR UND VERFAHREN ZUM BETRIEB DES STROMGENERATORS DER ENERGIEEXTRAKTIONSVORRICHTUNG
DISPOSITIF D'EXTRACTION D'ÉNERGIE COMPRENANT UN GÉNÉRATEUR ÉLECTRIQUE ET PROCÉDÉ DE COMMANDE D'UN GÉNÉRATEUR ÉLECTRIQUE DE DISPOSITIF D'EXTRACTION D'ÉNERGIE

(43) Date of publication of application: 06.03.2013
(73) Proprietor: MITSUBISHI HEAVY INDUSTRIES, Ltd., Tokyo 108-8215 (JP)
(72) Inventor: DUMNOV, Daniil, Loanhead Midlothian Lothian EH20 9TB (GB); CALDWELL,Niall, Loanhead Midlothian Lothian EH20 9TB (GB)
(74) Representative: Alistair Hindle Associates Limited
(86) International application number: PCT/JP2011/003887
(87) International publication number: WO 2013/005258

(56) References cited:
- EP-A2- 2 154 368
- WO-A1-2007/053036
- WO-A1-2010/032012
- WO-A2-2008/012587
- WO-A2-2009/076757

## Description

### Technical Field

The invention relates to energy extraction devices for extracting energy from renewable energy sources, for example, wind turbine generators for extracting energy from the wind. Energy extraction devices according to the invention have a hydraulic transmission including a hydraulic pump driven by a rotating shaft and a hydraulic motor driving a load, such as an electrical generator.

### Background Art

The technical background to the invention will now be discussed with reference to energy extraction devices which are wind turbine generators (WTGs), for extracting energy from the wind, however the same principles will apply to other types of energy extraction devices, for extracting energy from other renewable energy sources, and to energy extraction devices with motors driving other types of load from which at least some energy can be recovered.

In the case of a WTG or other energy extraction device which generates electrical power for an electricity grid using an electrical generator, a significant amount of power may be lost due to the operation of the electrical generator, rather than transmitted to the electricity grid. Electrical generators lose energy due to friction and typically also consume a significant amount of power independently of their rate of rotation or field current due to so-called 'winding losses'. These losses can be substantial, and can significantly reduce the efficiency of electrical generation, particularly at low fractions of maximum power output. However, for wind and other renewable energy sources, the rate of energy capture will typically vary and so it is important for electrical generation to be efficient at a range of power levels.

US 4,274,010 (Lawson-Tancred) discloses a WTG in which a wind turbine is coupled to an electrical generator through a hydraulic circuit including a working fluid receptacle in the form of a piston loaded with a weight. The electrical generator can be switched off for a period of time, during which time working fluid is stored in the piston, and then driven at a constant power for a period of time. Once the stored working fluid has been depleted, the electrical generator is again switched off. This reduces energy losses by having periods of time when power loss through the electrical generator is minimised. Advantageously, the wind turbine can continue to rotate and store power while the electrical generator is switched off and thereby in a dormant mode.

EP 2145368 A2 discloses a wind turbine with a hydraulic transmission.

It is also known to provide a WTG which has a hydraulic transmission including two electrical generators connected in parallel. At greater than 50% of maximum power output, at least one electrical generator is switched on at all times and both electrical generators are switched on for some of the time. At less than 50% of maximum power output, one electrical generator is switched on at some times and both electrical generators are switched off the remainder of the time. More than two electrical generators can be connected in parallel, and devices where the two electrical generators are not equally sized are also possible.

However, it requires a substantial amount of energy for an electrical generator (e.g. a synchronous generator) to be returned to the speed required to provide power at the correct frequency and phase for an electrical grid. Therefore, it has been found that the improvements in energy efficiency arising from the above approaches are limited.

Thus, the invention seeks to solve the technical problem of reducing the energy losses arising from the operation of electrical generators in energy extraction devices having a hydraulic transmission including a hydraulic pump driven by a rotating shaft and a hydraulic motor driving a load.

### Summary of Invention

According to a first aspect of the invention there is provided an energy extraction device for extracting energy from a renewable energy source, the device comprising a controller and a hydraulic circuit, the hydraulic circuit comprising:
at least one hydraulic pump and at least one hydraulic motor,
the or each hydraulic pump driven by a rotating shaft, the rotating shaft driven by a renewable energy source,
the or each hydraulic motor driving a load, the hydraulic circuit further comprising a low pressure manifold to route working fluid from the at least one hydraulic motor to the at least one hydraulic pump and a high pressure manifold to route fluid from the at least one hydraulic pump to the at least one motor, the or each hydraulic pump and the or each hydraulic motor each comprising a plurality of working chambers of cyclically varying volume and a plurality of valves for regulating the net displacement of working fluid between each working chamber and the high and low pressure manifolds, at least one valve associated with each working chamber being an electronically controlled valve, said electronically controlled valves being operable by the controller to select the volume of working fluid displaced by each said working chamber on each cycle of working chamber volume and thereby regulate the net rate of displacement of working fluid by the at least one hydraulic pump and the at least one hydraulic motor,
characterised in that the one or more hydraulic motors are switchable between an active state and a dormant state and at least one hydraulic motor is operable to carry out pumping cycles, wherein the controller is configured to cause the said at least one hydraulic motor to carry out one or more pumping cycles when the respective motor is switched to the dormant state, to thereby use energy from the respective load to pump working fluid from the low pressure manifold to the high pressure manifold.

Thus, energy is recovered from the load and used to pressurise working fluid received from the low pressure manifold and to output it to the high pressure manifold, either directly or indirectly (for example, into a pressurised working fluid store in continuous or selective fluid communication with the high pressure manifold). The energy is therefore stored and can later be used to return energy to the load, by carrying out further motoring cycles, to increase overall energy efficiency.

The invention is useful where the load can supply energy for a period of time, for example, due to inertia. It may be that the load is an electrical generator having a rotor and the energy from the respective load is rotational kinetic energy from the rotation of the rotor. Thus, the rotational kinetic energy of the rotor is to at least some extent recovered and used to pressurise working fluid, thereby storing the energy for later use in accelerating the rotor until it is again at the required frequency and phase to be synchronous with the electrical grid.

As well as storing rotational kinetic energy which would otherwise be lost, the increased pressure can facilitate rapid start up of the hydraulic motor at a later time. This may, for example, allow the minimum operating pressure in the high pressure manifold to be lower (typically slightly lower) than would otherwise be the case while still ensuring that, after storing the recovered kinetic energy of the rotor into the pressurised working fluid, there is sufficient pressure for rapid start up of the hydraulic motor. It also increases the overall energy capture of the energy extraction device because much less energy is dissipated as heat than when the generator slows down naturally due to friction and windage.

Typically, the high pressure manifold is in (continuous or selective) fluid communication with at least one working fluid receptacle. The at least one working fluid receptacle typically comprises at least one pressurisable container having a working fluid retaining volume which varies with the volume of working fluid retained in the or each working fluid receptacle. The at least one pressurisable container may, for example, be a gas-charged oleo-pneumatic accumulator filled at one end with pressurised nitrogen or other gases, a length of rubber and rigid hose or a fluid volume.

Preferably, there is a net flow of working fluid into the at least one working fluid receptacle when the at least one hydraulic motor carries out pumping cycles. Thus the at least one working fluid receptacle increases the capacity of the hydraulic transmission to store energy. Typically, there is a net flow of working fluid out of the at least one working fluid receptacle when the hydraulic motor is switched to the active state.

Preferably, in an operating mode of the energy extraction device, the pump is operable to continue to receive energy and to displace working fluid from the low pressure manifold to the high pressure manifold (and one or more working fluid receptacles, where present), while the hydraulic motor is in the dormant state.

Typically, the controller is configured to operate some or all of the hydraulic motors alternately in the dormant state or the active state, wherein in the dormant state, the at least one hydraulic motor has low or no net displacement of working fluid and in the active state, the at least one hydraulic motor has substantially the same net rate of displacement of working fluid on successive occasions. (The net rate of displacement of working fluid in the active state may vary significantly over longer periods of time).

Preferably, the volumes of the working chambers do not cycle in the dormant state (i.e. the shaft of the hydraulic motor is stationary) and the controller controls the electronically operated valves such that there is no displacement of fluid between the high and low pressure manifolds. It may be that the volumes of the working chambers continue to cycle but the controller selects the volume of working fluid displaced by the working chambers in the dormant state so that there is no, or no significant net displacement of working fluid, or at least that the net rate of displacement of working fluid is less than one-tenth, or preferably less than one-twentieth of the net rate of displacement of working fluid in the active state. For example, the controller may operate the electronically controlled valves in the dormant state to cause the working chambers execute idle cycles in which they remain sealed from the high pressure manifold and there is therefore no net displacement of working fluid from the high pressure manifold to the low pressure manifold. Typically, if the volumes of the working chambers continue to cycle, they do so at a rate which is less than one-tenth, or preferably less than one-twentieth of the rate at which they cycle in the active state. During idle cycles it may be that working fluid received from the low pressure manifold is displaced back to the low pressure manifold or that the working chamber remains sealed throughout a cycle of working chamber volume, in a cavitation idle mode, for example as disclosed in WO/2007/088380, which is incorporated herein by this reference.

The controller may comprise a processor and a computer readable storage device (such as memory) in electronic communication with the processor and storing program code, thereby configuring the controller to cause the energy extraction device to function as an energy extraction device according to the first aspect of the invention or according to the method of the second aspect of the invention (below).

Where the load is an electricity generator, the electricity generator preferably comprises an output in electrical communication with an electricity grid through an isolator. The energy extraction device (e.g. the isolator, or the isolator under control of the controller of the energy extraction device) may be configured to isolate the output of the electricity generator from the electricity grid when the hydraulic motor is in the dormant state, and optionally also while the hydraulic motor is carrying out pumping cycles. The energy extraction device may be configured to switch off power, or to vary the power (typically to reduce the power supplied) to one or more field circuits of the electricity generator through which current is passed in the active state, when the hydraulic motor is in the dormant state.

The energy extraction device may, for example, be a wind turbine generator, or a turbine generator for generating energy from the flow of moving water, such as a tidal turbine.

According to a second aspect of the present invention there is provided a method of controlling an energy extraction device for extracting energy from an energy flow from a renewable energy source, the device comprising a controller and a hydraulic circuit, the hydraulic circuit comprising:
at least one hydraulic pump and at least one hydraulic motor,
the at least one hydraulic pump driven by a rotating shaft, the rotating shaft driven by a renewable energy source,
the or each hydraulic motor driving a load,
a low pressure manifold to route working fluid from the hydraulic motor to the hydraulic pump, and
a high pressure manifold to route fluid from the hydraulic pump to the hydraulic motor,
the at least one hydraulic pump and the at least one hydraulic motor each comprising a plurality of working chambers of cyclically varying volume and a plurality of valves for regulating the net displacement of working fluid between each working chamber and the high and low pressure manifolds, at least one valve associated with each working chamber being an electronically controlled valve, said electronically controlled valves being operable by a controller to select the volume of working fluid displaced by each said working chamber on each cycle of working chamber volume and thereby regulate the net rate of displacement of working fluid by the at least one hydraulic pump and the at least one hydraulic motor,
characterised by at least one said hydraulic motor being operable to carry out pumping cycles and the method comprising causing the at least one said hydraulic motor to carry out one or more pumping cycles when the respective motor is switched from the active state to the dormant state, to thereby use energy from the respective load to pump working fluid from the low pressure manifold to the high pressure manifold.

Thus, the method may comprising switching the respective hydraulic motor from an active state in which it carries out motoring cycles to a pumping state in which it carries out one or more pumping cycles to a dormant state in which there is minimal or no net displacement of working fluid from the high pressure manifold to the low pressure manifold through the respective hydraulic motor.

Typically, one or more of the at least one hydraulic motors is operated alternately in the dormant state or the active state, wherein in the active state, the at least one hydraulic motor has substantially the same rate of net rate of displacement of working fluid on successive occasions, and in the dormant state, the at least one hydraulic motor has a net displacement of working fluid which less than one-tenth of the net displacement in the active state (and preferably less than one-twentieth, or no net displacement).

Typically, the load is an electrical generator having a rotor and the energy from the respective load is rotational kinetic energy from the rotation of the rotor. Typically, energy from the respective load is used transiently to pump working fluid from the low pressure manifold to the high pressure manifold. Thus the method may comprise switching from the active state to the dormant state via a transient pumping mode which is transient and in which the shaft of the hydraulic motor rotates. It may be that in the dormant state, the shaft of the hydraulic motor is substantially stationary.

It may be that, in an operating mode of the energy extraction device in which the hydraulic motor is in the dormant state, the pump continues to receive energy and to displace working fluid from the low pressure manifold to the high pressure manifold (and one or more working fluid receptacles, where present).

It may be that when the hydraulic motor is switched from the dormant state to the active state, the proportion of cycles of working chamber volume for which the electrically controlled valves are operated to cause a working chamber to displace a net amount of working fluid increases through at least one intermediate value.

Optional features discussed above in relation to either the first or second aspect of the invention are optional features of both the first and second aspects of the invention.

The invention extends in a third aspect to a computer readable storage medium storing program code which, when executed by the controller of an energy extraction device according to the first aspect of the invention, causes the energy extraction device to operate according to the second aspect of the invention.

### Brief Description of Drawings

An example embodiment of the present invention will now be illustrated with reference to the following Figures in which:
[fig.1]Figure 1 is a schematic diagram of a wind turbine generator connected to an electricity network and implementing the invention;
[fig.2]Figure 2 is a schematic diagram of a hydraulic motor for use in the wind turbine generator of Figure 1; and
[fig.3]Figure 3 is a flow diagram of the operation of a hydraulic motor and electricity generator during operation of the wind turbine generator of Figure 1.

### Description of Embodiments

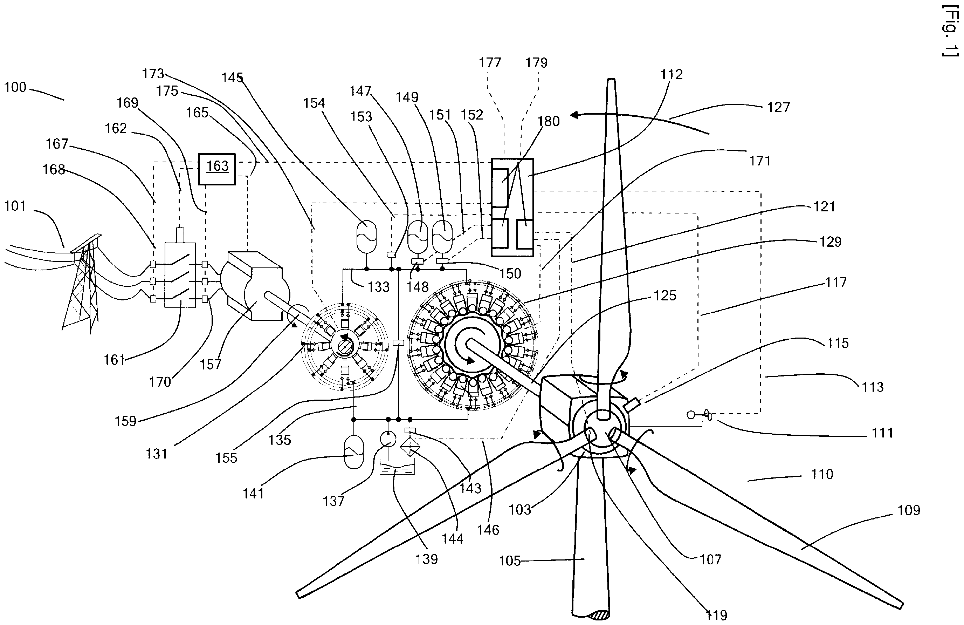

Figure 1 illustrates an example embodiment of the invention in the form of a Wind Turbine Generator (WTG, 100), functioning as the energy extraction device, and connected to an electricity network (101). The WTG comprises a nacelle (103) rotatably mounted to a tower (105) and having mounted thereon a hub (107) supporting three blades (109) known collectively as the rotor (110). An anemometer (111) attached externally to the nacelle provides a measured wind speed signal (113) to a controller (112). A rotor speed sensor (115) at the nacelle provides the controller with a rotor speed signal (117, representative of the current rotation rate of the rotating shaft). In the example system the angle of attack of each of the blades to the wind can be varied by a pitch actuator (119), which exchanges pitch actuation signals and pitch sensing signals (121) with the controller.

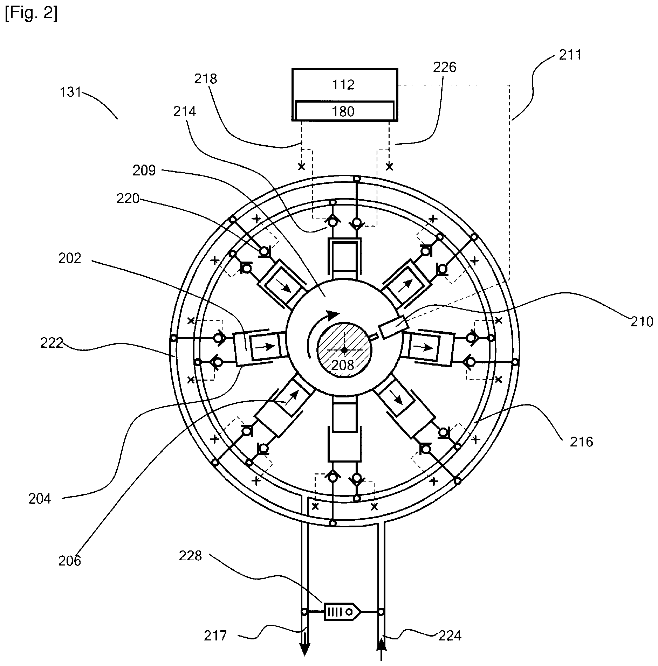

The hub is connected directly to a pump (129), through a rotor shaft (125), acting as the rotatable shaft, which rotates in the direction of rotor rotation (127). The pump has a fluid connection to a hydraulic motor (131), which is described further below with reference to Figure 2. The fluid connection between the pump and the hydraulic motor is through a high pressure manifold (133) and a low pressure manifold (135), connected to their high pressure port and low pressure port respectively, and is direct in the sense that there are no intervening valves to restrict the flow. The pump and hydraulic motor are preferably mounted directly one to the other so that the high pressure manifold and low pressure manifold are formed between and within them. A charge pump (137) continuously draws fluid from a reservoir (139) into the low pressure manifold, which is connected to a low pressure accumulator (141). A low pressure relief valve (143) returns fluid from the low pressure manifold to the reservoir through a heat exchanger (144) which is operable to influence the temperature of the working fluid and is controllable by the controller via a heat exchanger control line (146). The high pressure manifold, low pressure manifold, pump, motor and reservoir form a hydraulic circuit. A smoothing accumulator (145) is connected to the high pressure manifold between the pump and the hydraulic motor. A first high pressure accumulator (147) and a second high pressure accumulator (149) (each acting as a working fluid receptacle) are connected to the high pressure manifold through a first isolating valve (148) and a second isolating valve (150) respectively. The first and second high pressure accumulators may have different precharge pressures, and there may be additional high pressure accumulators with an even wider spread of precharge pressures. The states of the first and second isolating valves are set by the controller through first (151) and second (152) isolating valve signals respectively. Fluid pressure in the high pressure manifold is measured with a pressure sensor (153), which provides the controller with a high pressure manifold pressure signal (154). The pressure sensor may optionally also measure the fluid temperature and provide a fluid temperature signal to the controller. A high pressure relief valve (155) connects the high pressure and low pressure manifolds.

The hydraulic motor is connected to a generator (157), acting as the load, through a generator shaft (159). The generator is connected to an electricity network through a contactor (161), which receives a contactor control signal (162) from a generator and contactor controller (163) and is operable to selectively connect the generator to or isolate the generator from the electricity network. The generator and contactor controller receives measurements of voltage, current and frequency from electricity supply signals (167) and generator output signals (169), measured by electricity supply sensors (168) and generator output sensors (170) respectively, communicates them to the controller (112) and controls the output of the generator by adjusting field voltage generator control signals (165) in accordance with generator and contactor control signals (175) from the controller.

The pump and motor report the instantaneous angular position and speed of rotation of their respective shafts, and the temperature and pressure of the hydraulic oil, to the controller, and the controller sets the state of their respective valves, via pump actuation signals and pump shaft signals (171) and motor actuation signals and motor shaft signals (173). The controller receives coordinating signals (177) and sends monitoring signals (179), from and to respectively a farm controller (not shown in this figure). The monitoring signals typically comprise the pressure P_{S} of the high pressure manifold and the pressure P_{acc} of the accumulators, as well as the rotor speed wᵣ. Of course the monitoring signals may further comprise any values useful for monitoring the status and function of the WTG. The controller uses power amplifiers (180) to amplify the pitch actuation signals, the isolating valve signals, the pump actuation signals and the motor actuation signals.

Figure 2 illustrates the hydraulic motor (131) in the form of an electronically commutated hydraulic pump/motor comprising a plurality of working chambers (202, designated individually by letters A to H) which have volumes defined by the interior surfaces of cylinders (204) and pistons (206) which are driven from a rotatable shaft (208) by an eccentric cam (209) and which reciprocate within the cylinders to cyclically vary the volume of the working chambers. The rotatable shaft is firmly connected to and rotates with the generator shaft (159). The hydraulic motor may comprise a plurality of axially-spaced banks of working chambers driven from the same shaft by similarly spaced eccentric cams. A shaft position and speed sensor (210) determines the instantaneous angular position and speed of rotation of the shaft, and through signal line (211, being some of the motor actuation and motor shaft signals 173) informs the controller (112), which enables the controller to determine the instantaneous phase of the cycles of each working chamber. The controller is typically a microprocessor or microcontroller, which executes a stored program in use. The controller can take the form of a plurality of microprocessors or microcontrollers which may be distributed and which individually carry out a subset of the overall function of the controller.

The working chambers are each associated with Low Pressure Valves (LPVs) in the form of electronically actuated face-sealing poppet valves (214), which face inwards toward their associated working chamber and are operable to selectively seal off a channel extending from the working chamber to a low pressure conduit (216), which functions generally as a net source or sink of fluid in use and may connect one or several working chambers, or indeed all as is shown here, to a low pressure port (217) which is fluidically connected to the low pressure manifold (135) of the WTG. The LPVs are normally open solenoid closed valves which open passively when the pressure within the working chamber is less than or equal to the pressure within the low pressure manifold, i.e. during an intake stroke, to bring the working chamber into fluid communication with the low pressure manifold, but are selectively closable under the active control of the controller via LPV control lines (218, being some of the motor actuation and motor shaft signals 173) to bring the working chamber out of fluid communication with the low pressure manifold. Alternative electronically controllable valves may be employed, such as normally closed solenoid opened valves.

The working chambers are each further associated with High Pressure Valves (HPVs) (220) in the form of pressure actuated delivery valves. The HPVs open outwards from the working chambers and are operable to seal off a channel extending from the working chamber to a high pressure conduit (222), which functions as a net source or sink of fluid in use and may connect one or several working chambers, or indeed all as is shown here, to a high pressure port (224, acting as the inlet of the hydraulic motor) which is in fluid communication with the high pressure manifold (133). The HPVs function as normally-closed pressure-opening check valves which open passively when the pressure within the working chamber exceeds the pressure within the high pressure manifold. The HPVs also function as normally-closed solenoid opened check valves which the controller may selectively hold open via HPV control lines (226, being some of the motor actuation and motor shaft signals 173) once that HPV is opened by pressure within the associated working chamber. Typically the HPV is not openable by the controller against pressure in the high pressure manifold. The HPV may additionally be openable under the control of the controller when there is pressure in the high pressure manifold but not in the working chamber, or may be partially openable, for example if the valve is of the type and is operated according to the method disclosed in WO 2008/029073 or WO 2010/029358.

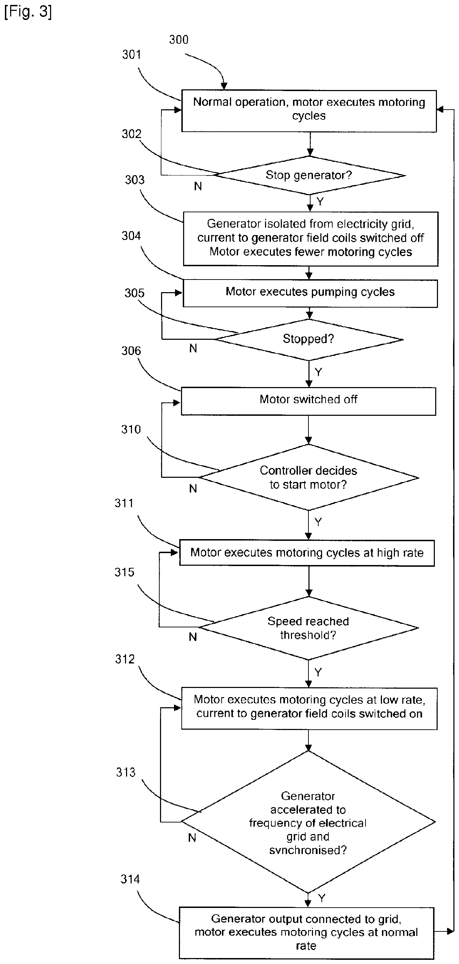

Operation (300) of the WTG will now be described with reference to Figure 3. Throughout operation, the hydraulic pump continuously pumps fluid from the low pressure manifold to the high pressure manifold, with the rate of displacement varying constantly as the wind speed fluctuates and the controller varies the displacement of the hydraulic pump to optimise properties such as torque exerted on the blade.

In an active state (301), the hydraulic motor carries out motoring cycles by the procedure described in, for example, EP 0 361 927, EP 0 494 236, and EP 1 537 333, the contents of which are hereby incorporated herein by way of this reference. In this procedure, the controller selects the net rate of displacement of fluid from the high pressure manifold by the hydraulic motor by actively closing one or more of the LPVs shortly before the point of minimum volume in the associated working chamber's cycle, closing the path to the low pressure manifold which causes the fluid in the working chamber to be compressed by the remainder of the contraction stroke. The associated HPV opens when the pressure across it equalises and a small amount of fluid is directed out through the associated HPV. The controller then actively holds open the associated HPV, typically until near the maximum volume in the associated working chamber's cycle, admitting fluid from the high pressure manifold and applying a torque to the rotatable shaft. Arrows on the ports (217,224) indicate fluid flow in the motoring mode; in the pumping mode which is discussed below, the flow is reversed. A pressure relief valve (228) may protect the hydraulic motor from damage.

By this procedure, the hydraulic motor drives the generator rotor by way of a rotating shaft, generating electricity which is output to the electricity grid.

The rate of rotation of the hydraulic motor shaft, and its phase, is typically dictated by the requirement that generated electricity be in phase with the electricity grid (i.e. that the generator and the hydraulic motor must rotate at a fixed frequency related to that of the electricity grid, and at a suitable phase relative to it). The hydraulic motor is typically driven at a substantially constant rate of displacement of working fluid selected to provide optimally efficient power transfer from the rotor to the electricity grid. As the amount of displacement of working fluid during each cycle of working chamber volume can be selected by the controller, the rate of displacement of working fluid can be varied to some extent while continuing to drive the electrical generator at the correct frequency and phase.

Referring now to Figure 3, from time to time during normal operation (300), the controller decides (302) to stop the hydraulic motor. This may be done, for example, because the amount of working fluid stored in the high pressure accumulators or the pressure of working fluid in the high pressure manifold has dropped below a threshold, or for other operational reasons.

In order to shut down the hydraulic motor, the controller decreases the hydraulic motor's rate of displacement of working fluid until the electrical output power of the generator is zero. This is preferably done gradually over several seconds to avoid disturbing the hydraulic system with sudden changes in the rate of displacement of working fluid. Once the electrical output power has been reduced to zero the controller instructs the generator contactor controller (163) to open the contactors (161) and isolate (303) the electrical output of the generator from the electrical grid. Since at this time the torque provided by the hydraulic motor is only enough to make up the losses of the generator, the hydraulic motor and generator do not accelerate beyond their speed during normal operation.

The controller then changes (304) the timing of valve control signals to cause the hydraulic motor to carry out pumping cycles. To create pumping cycles, the controller send a control signal to close one or more of the LPVs which is near the point of maximum volume in the associated working chamber's cycle, closing the path to the low pressure manifold and thereby directing fluid out through the associated HPV on the subsequent contraction stroke. In comparison to normal operation, in order to command the pumping cycles, the controller does not send a control signal to hold open one or more of the HPVs on the expansion stroke of any of the working chambers. The controller can select the proportion of cycles of working chamber volume for which pumping cycles take place and can also vary the precise phasing of the closure of the LPVs with respect to the varying working chamber volume to select the net displacement of working fluid on each cycle.

As the hydraulic motor and generator are decelerating towards a threshold speed which is below the normal (grid-connected) operating speed of the generator, the controller instructs the generator and contactor controller to reduce the field excitation so that the generator terminal voltage is reduced proportionally to the speed, reaching zero at the threshold speed.

The controller monitors the speed of the hydraulic motor or the electrical generator (305), and when they are almost stationary the controller switches off the electrically operated valves (306) so that the LPVs of the hydraulic motor are open and the HPVs of the hydraulic motor are closed.

The effect of this procedure is that the generator rotor is rapidly decelerated but, instead of being dissipated the angular kinetic energy of the rotor is instead stored by pumping working fluid from the low pressure manifold to the high pressure manifold.

At a later time, the controller decides (310) to restart the hydraulic motor. This may take place, for example, because the amount of working fluid stored in the high pressure accumulators or the pressure in the high pressure manifold has exceeded a threshold, or for other operational reasons. The controller then sends control signals to electronically controlled valves to cause the hydraulic motor to carry out motoring cycles (311) as before. Initially, the controller selects the net displacement by the hydraulic motor to cause the shaft of the hydraulic motor, and therefore the generator rotor, to accelerate rapidly to get the generator rotor to near to the angular velocity required to generate electricity at the correct frequency for the electricity grid (313).

The controller monitors the speed of the hydraulic motor or the electrical generator (315), and when the speed reaches a threshold, the current to the generator field coils is switched on (312) and the controller selects the net displacement by the hydraulic motor such that the phase and frequency of the generator rotor converges on the correct phase and frequency required for electricity generation. Typically, during this time, the hydraulic motor will displace working fluid at a rate significantly lower than during the previous acceleration phase. It requires a significant amount of energy to be input for the hydraulic motor and generator rotor to reach the correct frequency of rotation and this energy is obtained from the energy stored in the form of pressurised fluid in the high pressure manifold and the high pressure accumulators.

Once the generator rotor is rotating at the correct frequency and phase to generate electricity in synchrony with the electrical grid (313), the generator and contactor controller is instructed to reconnect (314) the electricity generator to the electricity grid. The controller then continues to operate the hydraulic motor in its normal active mode (301).

By carrying out some pumping cycles when the hydraulic motor is switched to the dormant state, the WTG stores energy which can be later used to restart the hydraulic motor and to get the electricity generator rotor up to the correct frequency for electricity generation. Thus, in contrast to known WTGs in which a generator is allowed to continue rotating, gradually dissipating its kinetic energy as heat, less rotational kinetic energy is lost. While the hydraulic motor is dormant, the hydraulic pump continues to be driven by the turbine, and pressurised fluid is accumulated in the high pressure accumulators.

The invention therefore enables significant energy savings. In contrast to allowing generators to coast to a stop over a period of time, spinning losses can be avoided in the dormant state. Another benefit is that, as energy from the generator rotor is used to pressurise working fluid, the minimum operating pressure in the high pressure manifold during normal operation and/or the amount of hydraulic fluid stored in the high pressure accumulators that is required for the generator to be rapidly started up may be a little less than would otherwise be the case (because the step of capturing the electrical generator's kinetic energy will boost the pressure in the high pressure manifold such that it is sufficient to restart the electrical generator from the hydraulic motor), or the additional pressure or supply of pressurised fluid could enable the generator to be brought up to speed more quickly.

In some embodiments, the hydraulic circuit will comprise more than one hydraulic motor connected in parallel, with each motor driving an electrical generator. In that case, the hydraulic motors can be individually operated, so that different numbers of hydraulic motors are operated at different times. For example, in a WTG with two electricity generators of equal capacity, receiving energy at 54% of the maximum rated output power, it may be preferable for one electricity generator to be on at all times and for both electricity generators to be on for some of the time. Thus, one generator, or both generators in turn, might be switched off for a period of time by the method described above and later restarted.

One skilled in the art will appreciate that alternative types of hydraulic motor may be employed which can selectively execute pumping cycles. Also, there is scope for varying the connecting or disconnecting of the electrical generator to and from the electricity grid, varying the generator field current, and varying the rate of displacement of working fluid through the hydraulic motor during the acceleration and deceleration of the electrical generator, depending on the particular machines employed and the goals of the designer.

Further modifications and variations falling within the scope of the invention will present themselves to those knowledgeable of the art.

## Claims

1. An energy extraction device (100) for extracting energy from a renewable energy source, the device comprising a controller (112) and a hydraulic circuit (129, 131, 133, 135), the hydraulic circuit (129, 131, 133, 135) comprising:
one or more hydraulic pumps (129) and one or more hydraulic motors (131),
the one or more hydraulic pumps (129) driven by a rotating shaft (125), the rotating shaft (125) driven by a renewable energy source,
the one or more hydraulic motors (131) driving a load (157), the hydraulic circuit (129, 131, 133, 135) further comprising a low pressure manifold (135) to route working fluid from the one or more hydraulic motors (131) to the one or more hydraulic pumps (129) and a high pressure manifold (133) to route fluid from the one or more hydraulic pumps (129) to the one or more motors (131),
the one or more hydraulic pumps (129) and the one or more hydraulic motors (131) each comprising a plurality of working chambers (202) of cyclically varying volume and a plurality of valves (214, 220) for regulating the net displacement of working fluid between each working chamber (202) and the high and low pressure manifolds (133, 135), at least one valve (214, 220) associated with each working chamber (202) being an electronically controlled valve, said electronically controlled valves being operable by the controller (112) to select the volume of working fluid displaced by each said working chamber (202) on each cycle of working chamber volume and thereby regulate the net rate of displacement of working fluid by the one or more hydraulic pumps (129) and the one or more hydraulic motors (131),
wherein the one or more hydraulic motors (131) are switchable between an active state (301) and a dormant state (306) and at least one of the one or more hydraulic motors (131) is operable to carry out pumping cycles (304), wherein the controller is configured to cause the said at least one hydraulic motor (131) to carry out motoring cycles to drive the load (157) when the said at least one motor (131) is in the active state (301),
**characterised in that** the controller is also configured to cause the said at least one hydraulic motor (131) to carry out one or more pumping cycles (304) when the said at least one hydraulic motor (131) is switched from the active state (301) to the dormant state (306), to thereby use energy from the load to pump working fluid from the low pressure manifold (135) to the high pressure manifold (133).

2. An energy extraction device (100) according to claim 1, wherein the load (157) is an electrical generator (157) having a rotor, wherein the controller is configured to cause the said at least one hydraulic motor (131) to carry out one or more pumping cycles (304) when the said at least one hydraulic motor (131) is switched from the active state (301) to the dormant state (306), to thereby use rotational kinetic energy from the rotation of the rotor of the load (157) to pump working fluid from the low pressure manifold (135) to the high pressure manifold (133) and decelerate the rotor.

3. An energy extraction device (100) according to claim 2, wherein the controller (112) is configured to operate some or all of the hydraulic motors (131) alternately in the dormant state (306) or the active state (301), wherein in the dormant state (306), the net displacement of working fluid by the at least one hydraulic motor (131) is less than one-tenth of the net displacement of working fluid in the active state (301) and in the active state (301), the at least one hydraulic motor (131) has substantially the same net rate of displacement of working fluid on successive occasions.

4. An energy extraction device (100) according to claim 2 or claim 3, wherein the electricity generator (157) comprises an output in electrical communication with an electricity grid (101) through an isolator (161), and the energy extraction device (100) is configured to isolate the output of the electricity generator (157) from the electricity grid (101) when the hydraulic motor (131) is in the dormant state (306).

5. An energy extraction device (100) according to claim 1, wherein the high pressure manifold (133) is in continuous or selective fluid communication with at least one working fluid receptacle (147, 149).

6. An energy extraction device (100) according to claim 5, wherein there is a net flow of working fluid into the at least one working fluid receptacle (147, 149) when the at least one hydraulic motor (131) carries out pumping cycles (304) and there is a net flow of working fluid out of the at least one working fluid receptacle when the hydraulic motor (131) is switched to the active state (301).

7. An energy extraction device (100) according to claim 1, wherein in an operating mode of the energy extraction device (100), the pump (129) is operable to continue to receive energy and to displace working fluid from the low pressure manifold (135) to the high pressure manifold (133) while the hydraulic motor (131) is in the dormant state (305).

8. An energy extraction device (100) according to claim 1, wherein the energy extraction device (100) is a wind turbine generator.

9. A method of controlling an energy extraction device (100) for extracting energy from an energy flow from a renewable energy source, the device comprising a controller (112) and a hydraulic circuit (129, 131, 133, 135), the hydraulic circuit (129, 131, 133, 135) comprising:
one or more hydraulic pumps (129) and one or more hydraulic motors (131),
the one or more hydraulic pumps (129) driven by a rotating shaft (125), the rotating shaft driven (125) by a renewable energy source,
the one or more hydraulic motors (131) driving a load (157),
a low pressure manifold (135) to route working fluid from the one or more hydraulic motors (131) to the one or more hydraulic pumps (129), and
a high pressure manifold (133) to route fluid from the one or more hydraulic pumps (129) to the one or more hydraulic motors (131),
the one or more hydraulic pumps (129) and the one or more hydraulic motors (131) each comprising a plurality of working chambers (202) of cyclically varying volume and a plurality of valves (214, 220) for regulating the net displacement of working fluid between each working chamber (202) and the high and low pressure manifolds (133, 135), at least one valve (214, 220) associated with each working chamber (202) being an electronically controlled valve, said electronically controlled valves being operable by the controller (112) to select the volume of working fluid displaced by each said working chamber (202) on each cycle of working chamber volume and thereby regulate the net rate of displacement of working fluid by the one or more hydraulic pumps (129) and the one or more hydraulic motors (131),
**characterised by** at least one of said one or more hydraulic motors (131) being operable to carry out pumping cycles and the method comprising: switching the said at least one hydraulic motor (131) from the active state to the dormant state; and causing the at least one said hydraulic motor (131) to carry out one or more pumping cycles (304) when the said at least one hydraulic motor is switched from the active state (301) to the dormant state (306), to thereby use energy from the load (157) to pump working fluid from the low pressure manifold (135) to the high pressure manifold (133).

10. A method according to claim 9, wherein the method comprises switching the said at least one hydraulic motor (131) from an active state (301) in which it carries out motoring cycles to a pumping state (304) in which it carries out one or more pumping cycles to a dormant state (306) in which there is minimal or no net displacement of working fluid from the high pressure manifold (133) to the low pressure manifold (135) through the said at least one hydraulic motor (131).

11. A method according to claim 9, wherein one or more of the at least one hydraulic motors (131) is operated alternately in the dormant state (306) or the active state (301), wherein in the active state (301), the at least one hydraulic motor (131) has substantially the same net rate of displacement of working fluid on successive occasions, and in the dormant state (306), the at least one hydraulic motor (131) has a net displacement of working fluid which less than one-tenth of the net displacement in the active state (301).

12. A method according to claim 10 or claim 11, wherein in an operating mode of the energy extraction device (100) in which the hydraulic motor (131) is in the dormant state (306), the pump (129) continues to receive energy and to displace working fluid from the low pressure manifold (135) to the high pressure manifold (133).

13. A method according to claim 12 wherein, when the hydraulic motor (131) is switched from the dormant state (306) to the active state (301), the proportion of cycles of working chamber volume for which the electrically controlled valves are operated to cause a working chamber (202) to displace a net amount of working fluid increases through at least one intermediate value.

14. A computer readable storage medium storing program code which, when executed by the controller (112) of an energy extraction device (100) according to claim 1, causes the energy extraction device (100) to operate according to the method of claim 9.

## Patentansprüche

1. Energieextraktionsvorrichtung (100) zum Extrahieren von Energie aus einer Quelle für erneuerbare Energie, wobei die Vorrichtung eine Steuereinheit (112) und einen Hydraulikkreis (129, 131, 133, 135) umfasst, wobei der Hydraulikkreis (129, 131, 133, 135) Folgendes umfasst:
eine oder mehrere Hydraulikpumpen (129) und einen oder mehrere Hydraulikmotoren (131),
wobei die eine die oder mehreren Hydraulikpumpen (129) durch eine Drehwelle (15) angetrieben werden, wobei die Drehwelle (125) durch eine Quelle für erneuerbare Energie angetrieben wird,
wobei der eine oder die mehreren Hydraulikmotoren (131) eine Last antreiben, wobei der Hydraulikkreis (129, 131, 133, 135) ferner einen Niederdruckverteiler (135), um Arbeitsfluid von dem einen oder den mehreren Hydraulikmotoren (131) zu der einen oder den mehreren Hydraulikpumpen (129) zu lenken, und einen Hochdruckverteiler (133), um Fluid von der einen oder den mehreren Hydraulikpumpen (129) zu dem einen oder den mehreren Motoren (131) zu lenken, umfasst,
wobei die eine oder die mehreren Hydraulikpumpen (129) und der eine oder die mehreren Hydraulikmotoren (131) jeweils mehrere Arbeitskammern (202) mit einem zyklisch variierenden Volumen und mehrere Ventile (214, 220) zum Regulieren der Nettoverlagerung von Arbeitsfluid zwischen jeder Arbeitskammer (202) und den Niederdruck- und Hochdruckverteilern (133, 135) umfassen, wobei wenigstens ein Ventil (214, 220), das jeder Arbeitskammer (202) zugeordnet ist, ein elektronisch gesteuertes Ventil ist und die elektronisch gesteuerten Ventile durch die Steuereinheit (112) betätigt werden können, um das Volumen des Arbeitsfluids, das durch jede Arbeitskammer (202) in jedem Zyklus des Arbeitskammervolumens verlagert wird, auszuwählen und dadurch die Nettorate der Verlagerung des Arbeitsfluids durch die eine oder die mehreren Hydraulikpumpen (129) und den einen oder die mehreren Hydraulikmotoren (131) zu regulieren,
wobei der eine oder die mehreren Hydraulikmotoren (131) zwischen einem aktiven Zustand (301) und einem Ruhezustand (306) schaltbar sind und wenigstens einer aus dem einen oder den mehreren Hydraulikmotoren (131) arbeitet, um Pumpzyklen (304) auszuführen, wobei die Steuereinheit konfiguriert ist zu bewirken, dass der wenigstens eine Hydraulikmotor (131) Motorzyklen ausführt, um die Last (157) anzutreiben, wenn der wenigstens eine Motor (131) in dem aktiven Zustand ist,
**dadurch gekennzeichnet, dass** die Steuereinheit außerdem konfiguriert ist zu bewirken, dass der wenigstens eine Hydraulikmotor (131) einen oder mehrere Pumpzyklen (304) ausführt, wenn der wenigstens eine Hydraulikmotor (131) von dem aktiven Zustand (301) in den Ruhezustand (306) geschaltet wird, um dadurch Energie von der Last zu verwenden, um Arbeitsfluid aus dem Niederdruckverteiler (135) zu dem Hochdruckverteiler (133) zu pumpen.

2. Energieextraktionsvorrichtung (100) nach Anspruch 1, wobei die Last (157) ein elektrischer Generator (157) ist, der einen Rotor aufweist, wobei die Steuereinheit konfiguriert ist zu bewirken, dass der wenigstens eine Hydraulikmotor (131) einen oder mehrere Pumpzyklen (304) ausführt, wenn der wenigstens eine Hydraulikmotor (131) von dem aktiven Zustand (301) in den Ruhezustand (306) geschaltet wird, um dadurch die kinetische Rotationsenergie aus der Drehung des Rotors der Last (157) zu nutzen, um Arbeitsfluid aus dem Niederdruckverteiler (135) zu dem Hochdruckverteiler (133) zu pumpen und den Rotor zu verlangsamen.

3. Energieextraktionsvorrichtung (100) nach Anspruch 2, wobei die Steuereinheit (112) konfiguriert ist, einige oder alle der Hydraulikmotoren (131) alternierend in dem Ruhezustand (306) oder dem aktiven Zustand (301) zu betreiben, wobei in dem Ruhezustand (306) die Nettoverlagerung von Arbeitsfluid durch den wenigstens einen Hydraulikmotor (131) geringer ist als ein Zehntel der Nettoverlagerung von Arbeitsfluid in dem aktiven Zustand (301), und in dem aktiven Zustand (301) der wenigstens eine Hydraulikmotor (131) im Wesentlichen dieselbe Nettorate der Verlagerung von Arbeitsfluid in aufeinanderfolgenden Fällen aufweist.

4. Energieextraktionsvorrichtung (100) nach Anspruch 2 oder Anspruch 3, wobei der Elektrizitätsgenerator (157) einen Ausgang in elektrischer Kommunikation mit einem Elektrizitätsnetz (101) über einen Isolator (161) aufweist und die Energieextraktionsvorrichtung (100) konfiguriert ist, den Ausgang des Elektrizitätsgenerators (157) von dem Elektrizitätsnetz (101) zu isolieren, wenn der Hydraulikmotor (131) in dem Ruhezustand (306) ist.

5. Energieextraktionsvorrichtung (100) nach Anspruch 1, wobei der Hochdruckverteiler (133) in kontinuierlicher oder selektiver fluidtechnischer Kommunikation mit wenigstens einem Arbeitsfluidbehälter (147, 149) ist.

6. Energieextraktionsvorrichtung (100) nach Anspruch 5, wobei ein Nettofluss von Arbeitsfluid in den wenigstens einen Arbeitsfluidbehälter (147, 148) vorhanden ist, wenn der wenigstens eine Hydraulikmotor (131) Pumpzyklen (304) ausführt, und ein Nettofluss von Arbeitsfluid aus dem wenigstens einen Arbeitsfluidbehälter heraus vorhanden ist, wenn der Hydraulikmotor (131) zu dem aktiven Zustand (301) geschaltet ist.

7. Energieextraktionsvorrichtung (100) nach Anspruch 1, wobei in einem Betriebszustand der Energieextraktionsvorrichtung (100) die Pumpe arbeitet, um fortgesetzt Energie aufzunehmen und Arbeitsfluid aus dem Niederdruckverteiler (135) zu dem Hochdruckverteiler (133) zu verlagern, während der Hydraulikmotor (131) in dem Ruhezustand (305) ist.

8. Energieextraktionsvorrichtung (100) nach Anspruch 1, wobei die Energieextraktionsvorrichtung (100) ein Windenergieanlagengenerator ist.

9. Verfahren zum Steuern einer Energieextraktionsvorrichtung (100) zum Extrahieren von Energie aus einem Energiefluss von einer Quelle für erneuerbare Energie, wobei die Vorrichtung eine Steuereinheit (112) und einen Hydraulikkreis (129, 131, 133, 135) umfasst, wobei der Hydraulikkreis (129, 131, 133, 135) Folgendes umfasst:
eine oder mehrere Hydraulikpumpen (129) und einen oder mehrere Hydraulikmotoren (131),
wobei die eine oder die mehreren Hydraulikpumpen (129) durch eine Drehwelle (125) angetrieben werden und die Drehwelle (125) durch eine Quelle für erneuerbare Energie angetrieben wird,
wobei der eine oder die mehreren Hydraulikmotoren (131) eine Last (157) antreiben,
einen Niederdruckverteiler (135), um Arbeitsfluid von dem einen oder den mehreren Hydraulikmotoren (131) zu der einen oder den mehreren Hydraulikpumpen (129) zu lenken, und
einen Hochdruckverteiler (133), um Fluid von der einen oder den mehreren Hydraulikpumpen (129) zu dem einen oder den mehreren Hydraulikmotoren (131) zu lenken,
wobei die eine oder die mehreren Hydraulikpumpen (129) und der eine oder die mehreren Hydraulikmotoren (131) jeweils mehrere Arbeitskammern (202) mit einem zyklisch variierenden Volumen und mehrere Ventile (214, 220) zum Regulieren der Nettoverlagerung von Arbeitsfluid zwischen jeder Arbeitskammer (202) und den Niederdruck- und Hochdruckverteilern (133, 135) umfassen, wobei wenigstens ein Ventil (214, 220), das jeder Arbeitskammer (202) zugeordnet ist, ein elektronisch gesteuertes Ventil ist und die elektronisch gesteuerten Ventile durch die Steuereinheit (112) betätigt werden können, um das Volumen des Arbeitsfluids, das durch jede Arbeitskammer (202) in jedem Zyklus des Arbeitskammervolumens verlagert wird, auszuwählen und dadurch die Nettorate der Verlagerung des Arbeitsfluids durch die eine oder die mehreren Hydraulikpumpen (129) und den einen oder die mehreren Hydraulikmotoren (131) zu regulieren,
**dadurch gekennzeichnet, dass** wenigstens einer aus dem einen oder den mehreren Hydraulikmotoren (131) arbeitet, um Pumpzyklen auszuführen, und wobei das Verfahren Folgendes umfasst: Schalten des wenigstens einen Hydraulikmotors (131) von dem aktiven Zustand zu dem Ruhezustand; und Bewirken, dass der wenigstens eine Hydraulikmotor (131) einen oder mehrere Pumpzyklen (304) ausführt, wenn der wenigstens eine Hydraulikmotor von dem aktiven Zustand (301) in den Ruhezustand (306) geschaltet wird, um dadurch Energie von der Last (157) zu verwenden, um Arbeitsfluid aus dem Niederdruckverteiler (135) zu dem Hochdruckverteiler (133) zu pumpen.

10. Verfahren nach Anspruch 9, wobei das Verfahren das Schalten des wenigstens einen Hydraulikmotors (131) von einem aktiven Zustand (301), in dem er Motorzyklen ausführt, zu einem Pumpzustand (304), in dem er einen oder mehrere Pumpzyklen ausführt, zu einem Ruhezustand (306), in dem eine minimale oder keine Nettoverlagerung von Arbeitsfluid von dem Hochdruckverteiler (133) zu dem Niederdruckverteiler (135) durch den wenigstens einen Hydraulikmotor (131) vorhanden ist, umfasst.

11. Verfahren nach Anspruch 9, wobei einer oder mehrere des wenigstens einen Hydraulikmotors (131) alternierend in dem Ruhezustand (306) oder in dem aktiven Zustand (301) betrieben wird, wobei in dem aktiven Zustand (301) der wenigstens eine Hydraulikmotor (131) im Wesentlichen dieselbe Nettorate der Verlagerung von Arbeitsfluid auf aufeinanderfolgenden Fällen aufweist und in dem Ruhezustand (306) der wenigstens eine Hydraulikmotor (131) eine Nettoverlagerung von Arbeitsfluid aufweist, die kleiner ist als ein Zehntel der Nettoverlagerung in dem aktiven Zustand (301).

12. Verfahren nach Anspruch 10 oder Anspruch 11, wobei in einem Betriebszustand der Energieextraktionsvorrichtung (100), in der der Hydraulikmotor (131) in dem Ruhezustand (306) ist, die Pumpe (129) weiterhin Energie aufnimmt und Arbeitsfluid von dem Niederdruckverteiler (135) zu dem Hochdruckverteiler (133) verlagert.

13. Verfahren nach Anspruch 12, wobei dann, wenn der Hydraulikmotor (131) von dem Ruhezustand (306) zu dem aktiven Zustand (301) geschaltet wird, der relative Anteil von Zyklen des Arbeitskammervolumens, für die die elektrisch gesteuerten Ventile betätigt werden, um zu bewirken, dass eine Arbeitskammer (202) eine Nettomenge von Arbeitsfluid verlagert, über wenigstens einen Zwischenwert hinweg ansteigt.

14. Computerlesbares Speichermedium, das Programmcode speichert, der dann, wenn er durch die Steuereinheit (112) einer Energieextraktionsvorrichtung nach Anspruch 1 ausgeführt wird, bewirkt, dass die Energieextraktionsvorrichtung (100) gemäß dem Verfahren nach Anspruch 9 arbeitet.

## Revendications

1. Dispositif d'extraction d'énergie (100) destiné à extraire de l'énergie à partir d'une source d'énergie renouvelable, le dispositif comprenant un contrôleur (112) et un circuit hydraulique (129, 131, 133, 135), le circuit hydraulique (129, 131, 133, 135) comprenant :
une ou plusieurs pompes hydrauliques (129) et un ou plusieurs moteurs hydrauliques (131),
la ou les pompes hydrauliques (129) étant entraînées par un arbre tournant (125), l'arbre tournant (125) étant entraîné par une source d'énergie renouvelable,
le ou les moteurs hydrauliques (131) entraînant une charge (157), le circuit hydraulique (129, 131, 133, 135) comprenant en outre un collecteur basse pression (135) pour acheminer un fluide de travail depuis le ou les moteurs hydrauliques (131) jusqu'à la ou les pompes hydrauliques (129) et un collecteur haute pression (133) pour acheminer le fluide depuis la ou les pompes hydrauliques (129) jusqu'au(x) moteur(s) (131),
la ou les pompes hydrauliques (129) et le ou les moteurs hydrauliques (131) comprenant chacun une pluralité de chambres de travail (202) de volume variant cycliquement et une pluralité de vannes (214, 220) destinées à réguler le déplacement net de fluide de travail entre chaque chambre de travail (202) et les collecteurs haute et basse pression (133, 135), au moins une vanne (214, 220) associée à chaque chambre de travail (202) étant une vanne à commande électronique, lesdites vannes à commande électronique étant utilisables par le contrôleur (112) pour sélectionner le volume de fluide de travail déplacé par chaque dite chambre de travail (202) sur chaque cycle de volume de chambre de travail et réguler ainsi la cadence nette de déplacement de fluide de travail par la ou les pompes hydrauliques (129) et le ou les moteurs hydrauliques (131),
dans lequel le ou les moteurs hydrauliques (131) sont commutables entre un état actif (301) et un état dormant (306) et le ou au moins un des moteurs hydrauliques (131) est utilisable pour réaliser des cycles de pompage (304), le contrôleur étant configuré pour amener ledit au moins un moteur hydraulique (131) à réaliser des cycles d'entraînement pour entraîner la charge (157) quand ledit au moins un moteur (131) se trouve dans l'état actif (301),
**caractérisé en ce que** le contrôleur est également configuré pour amener ledit au moins un moteur hydraulique (131) à réaliser un ou plusieurs cycles de pompage (304) quand ledit au moins un moteur hydraulique (131) est commuté de l'état actif (301) à l'état dormant (306), pour utiliser ainsi l'énergie issue de la charge pour pomper le fluide de travail depuis le collecteur basse pression (135) jusqu'au collecteur haute pression (133).

2. Dispositif d'extraction d'énergie (100) selon la revendication 1, dans lequel la charge (157) est un générateur électrique (157) ayant un rotor, le contrôleur étant configuré pour amener ledit au moins un moteur hydraulique (131) à réaliser un ou plusieurs cycles de pompage (304) quand ledit au moins un moteur hydraulique (131) est commuté de l'état actif (301) à l'état dormant (306), pour utiliser ainsi l'énergie cinétique rotationnelle issue de la rotation du rotor de la charge (157) pour pomper le fluide de travail depuis le collecteur basse pression (135) jusqu'au collecteur haute pression (133) et décélérer le rotor.

3. Dispositif d'extraction d'énergie (100) selon la revendication 2, dans lequel le contrôleur (112) est configuré pour faire fonctionner certains ou tous les moteurs hydrauliques (131) en alternance dans l'état dormant (306) ou l'état actif (301), dans lequel dans l'état dormant (306), le déplacement net de fluide de travail par l'au moins un moteur hydraulique (131) est inférieur à un dixième du déplacement net de fluide de travail dans l'état actif (301) et dans l'état actif (301), l'au moins un moteur hydraulique (131) a sensiblement la même cadence nette de déplacement de fluide de travail à des occasions successives.

4. Dispositif d'extraction d'énergie (100) selon la revendication 2 ou 3, dans lequel le générateur électrique (157) comprend une sortie en communication électrique avec un réseau électrique (101) par le biais d'un isolateur (161), et le dispositif d'extraction d'énergie (100) est configuré pour isoler la sortie du générateur électrique (157) du réseau électrique (101) quand le moteur hydraulique (131) se trouve dans l'état dormant (306).

5. Dispositif d'extraction d'énergie (100) selon la revendication 1, dans lequel le collecteur haute pression (133) est en communication fluidique continue ou sélective avec au moins un récipient de fluide de travail (147, 149).

6. Dispositif d'extraction d'énergie (100) selon la revendication 5, dans lequel il y a un flux net de fluide de travail vers l'au moins un récipient de fluide de travail (147, 149) quand l'au moins un moteur hydraulique (131) réalise des cycles de pompage (304) et il y a un flux net de fluide de travail depuis l'au moins un récipient de fluide de travail quand le moteur hydraulique (131) est commuté vers l'état actif (301).

7. Dispositif d'extraction d'énergie (100) selon la revendication 1 dans lequel, dans un mode de fonctionnement du dispositif d'extraction d'énergie (100), la pompe (129) est utilisable pour continuer à recevoir de l'énergie et à déplacer le fluide de travail depuis le collecteur basse pression (135) jusqu'au collecteur haute pression (133) pendant que le moteur hydraulique (131) se trouve dans l'état dormant (305).

8. Dispositif d'extraction d'énergie (100) selon la revendication 1, le dispositif d'extraction d'énergie (100) étant un générateur d'éolienne.

9. Procédé de contrôle d'un dispositif d'extraction d'énergie (100) destiné à extraire de l'énergie d'un flux d'énergie provenant d'une source d'énergie renouvelable, le dispositif comprenant un contrôleur (112) et un circuit hydraulique (129, 131, 133, 135), le circuit hydraulique (129, 131, 133, 135) comprenant :
une ou plusieurs pompes hydrauliques (129) et un ou plusieurs moteurs hydrauliques (131),
la ou les pompes hydrauliques (129) étant entraînées par un arbre tournant (125), l'arbre tournant (125) étant entraîné par une source d'énergie renouvelable,
le ou les moteurs hydrauliques (131) entraînant une charge (157),
un collecteur basse pression (135) pour acheminer un fluide de travail depuis le ou les moteurs hydrauliques (131) jusqu'à la ou les pompes hydrauliques (129), et
un collecteur haute pression (133) pour acheminer le fluide depuis la ou les pompes hydrauliques (129) jusqu'au(x) moteur(s) (131),
la ou les pompes hydrauliques (129) et le ou les moteurs hydrauliques (131) comprenant chacun une pluralité de chambres de travail (202) de volume variant cycliquement et une pluralité de vannes (214, 220) destinées à réguler le déplacement net de fluide de travail entre chaque chambre de travail (202) et les collecteurs haute et basse pression (133, 135), au moins une vanne (214, 220) associée à chaque chambre de travail (202) étant une vanne à commande électronique, lesdites vannes à commande électronique étant utilisables par le contrôleur (112) pour sélectionner le volume de fluide de travail déplacé par chaque dite chambre de travail (202) sur chaque cycle de volume de chambre de travail et réguler ainsi la cadence nette de déplacement de fluide de travail par la ou les pompes hydrauliques (129) et le ou les moteurs hydrauliques (131),
**caractérisé par** ledit ou au moins un desdits moteurs hydrauliques (131) étant utilisable pour réaliser des cycles de pompage, et le procédé comprenant les étapes suivantes : commuter ledit au moins un moteur hydraulique (131) de l'état actif à l'état dormant ; et amener ledit au moins un moteur hydraulique (131) à réaliser un ou plusieurs cycles de pompage (304) quand ledit au moins un moteur hydraulique est commuté de l'état actif (301) à l'état dormant (306), pour utiliser ainsi l'énergie issue de la charge (157) pour pomper le fluide de travail depuis le collecteur basse pression (135) jusqu'au collecteur haute pression (133).

10. Procédé selon la revendication 9, le procédé comprenant la commutation dudit au moins un moteur hydraulique (131) d'un état actif (301) dans lequel il réalise des cycles d'entraînement à un état de pompage (304) dans lequel il réalise un ou plusieurs cycles de pompage et à un état dormant (306) dans lequel il y a un déplacement net de fluide de travail minimal ou nul depuis le collecteur haute pression (133) jusqu'au collecteur basse pression (135) par le biais dudit au moins un moteur hydraulique (131).

11. Procédé selon la revendication 9, dans lequel le ou un ou plusieurs des moteurs hydrauliques (131) fonctionnent en alternance dans l'état dormant (306) ou l'état actif (301), dans lequel dans l'état actif (301), l'au moins un moteur hydraulique (131) a sensiblement la même cadence nette de déplacement de fluide de travail à des occasions successives, et dans l'état dormant (306), l'au moins un moteur hydraulique (131) a un déplacement net de fluide de travail qui est inférieur à un dixième du déplacement net dans l'état actif (301).

12. Procédé selon la revendication 10 ou la revendication 11 dans lequel, dans un mode de fonctionnement du dispositif d'extraction d'énergie (100) dans lequel le moteur hydraulique (131) se trouve dans l'état dormant (306), la pompe (129) continue à recevoir de l'énergie et à déplacer le fluide de travail depuis le collecteur basse pression (135) jusqu'au collecteur haute pression (133).

13. Procédé selon la revendication 12 dans lequel, quand le moteur hydraulique (131) est commuté de l'état dormant (306) à l'état actif (301), la proportion de cycles de volume de chambre de travail pour lesquels les vannes à commande électrique sont actionnées pour amener une chambre de travail (202) à déplacer une quantité nette de fluide de travail augmente d'au moins une valeur intermédiaire.

14. Support de stockage lisible par ordinateur stockant un code de programme qui, lorsqu'il est exécuté par le contrôleur (112) d'un dispositif d'extraction d'énergie (100) selon la revendication 1, fait fonctionner le dispositif d'extraction d'énergie (100) selon le procédé de la revendication 9.
